(19) Europäisches Patentamt / European Patent Office / Office européen des brevets

(11) **EP 2 459 754 B1**

(12) **EUROPÄISCHE PATENTSCHRIFT**

(45) Veröffentlichungstag und Bekanntmachung des Hinweises auf die Patenterteilung:
**31.12.2014 Patentblatt 2015/01**

(21) Anmeldenummer: **10734103.4**

(22) Anmeldetag: **14.07.2010**

(51) Int Cl.:
*C21B 13/00* [(2006.01)]      *C21B 13/02* [(2006.01)]
*C22B 5/12* [(2006.01)]

(86) Internationale Anmeldenummer:
**PCT/EP2010/060130**

(87) Internationale Veröffentlichungsnummer:
**WO 2011/012448 (03.02.2011 Gazette 2011/05)**

(54) **REFORMERGASBASIERTES REDUKTIONSVERFAHREN MIT RÜCKFÜHRUNG DER REDUKTIONSABGASE UND DECARBONISIERUNG DES ABGASTEILS VERWENDET ALS BRENNGAS FÜR DEN REFORMER**

REFORMER GAS BASED DIRECT REDUCTION PROCESS WITH RECYCLING OF REDUCTION OFF GASES AND DECARBONISATION OF RECYCLED GAS PORTION USED AS FUEL GAS FOR THE REFORMER BURNER

RÉDUCTION DIRECTE PAR GAZ DE REFORMAGE COMPRENANT LE RECYCLAGE DES GAZ RÉDUCTEURS USÉS ET LA DÉCARBONISATION DE LA FRACTION GAZEUSE RECYCLÉE POUR USAGE COMME COMBURANT DU REFORMEUR

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **31.07.2009 AT 12172009**

(43) Veröffentlichungstag der Anmeldung:
**06.06.2012 Patentblatt 2012/23**

(73) Patentinhaber: **Siemens VAI Metals Technologies GmbH**
**4031 Linz (AT)**

(72) Erfinder:
• **MILLNER, Robert**
**A-3382 Loosdorf (AT)**

• **PEER, Guenter**
**A-4623 Gunskirchen (AT)**

(74) Vertreter: **Maier, Daniel Oliver**
**Siemens AG**
**Postfach 22 16 34**
**80506 München (DE)**

(56) Entgegenhaltungen:
WO-A1-2005/054520      WO-A1-2006/135984
WO-A2-2009/037587      DE-A1- 2 651 309
GB-A- 748 167           JP-A- 61 099 613
US-B1- 6 183 535

EP 2 459 754 B1

**Beschreibung**

Die vorliegende Erfindung betrifft ein Verfahren zur Reduktion von Metalloxiden zu metallisiertem Material durch Kontakt mit heißem Reduktionsgas, welches zumindest zum Teil durch katalytische Reformierung eines Gemisches von

- einem Gas, welches Kohlendioxid ($CO_2$) und/oder Wasserdampf ($H_2O$ enthält, mit
- gasförmigen Kohlenwasserstoffen

hergestellt wird,
wobei das Brenngas für die Wärme für die bei der Reformierung ablaufenden endothermen Reformierungsprozesse liefernden Brenner zumindest teilweise aus einer Teilmenge des bei der Reduktion von Metalloxiden zu metallisiertem Material anfallenden Topgases gewonnen wird, wobei diese Teilmenge des Topgases vor ihrer Nutzung als Komponente des Brenngases zunächst einer Entstaubung und dann einer CO-Konvertierungsreaktion unterzogen wird, und das bei der CO-Konvertierungsreaktion erhaltene Konvertierungsgas nach einer Abkühlung einer $CO_2$-Entfernung unterzogen wird. Weiterhin betrifft die vorliegende Erfindung eine Vorrichtung zur Durchführung des Verfahrens.
Ein Verfahren zur Reduktion von Metalloxiden zu metallisiertem Material durch Kontakt mit heißem Reduktionsgas, welches durch katalytische Reformierung eines Gemisches von Erdgas mit dem aus dem Reduktionsaggregat entnommenen Topgas hergestellt wird, wobei das Brenngas für die Wärme für die bei der Reformierung ablaufenden endothermen Reformierungsprozesse liefernden Brenner aus einer Teilmenge des bei der Reduktion von Metalloxiden zu metallisiertem Material anfallenden Topgases, und Erdgas gewonnen wird, ist beispielsweise in Figur 1 der WO2006135984 beschrieben. Aufgrund immer strenger werdender gesetzlicher Umweltvorschriften ist die Abtrennung von $CO_2$ zur Erzeugung eines konzentrierten $CO_2$ Stromes aus den bei den Verfahren entstehenden Abgasen gewünscht, mit der Möglichkeit zur späteren Sequestrierung des $CO_2$ Stromes, bevor die so behandelten Abgase in die Umwelt entlassen werden. Bei einem Verfahren wie in WO2006135984 gezeigt wird das Brenngas für den Reformer mit Luft als Sauerstoffquelle verbrannt, weshalb das Verbrennungsabgas eine große Menge Stickstoff enthält. Entsprechend müssen nachfolgende Anlagen zur $CO_2$-Entfernung aus dem Verbrennungsabgas groß dimensioniert sein. Zudem kommen für eine $CO_2$-Entfernung aus dem Verbrennungsabgas im Wesentlichen nur chemische Absorptionsverfahren in Frage, welche sich durch eine große Anlagengröße und hohen Verbrauch an Energie, die beispielsweise über Dampf zugeführt wird, kennzeichnen.
Verfahren und Vorrichtungen zur Direktreduktion von Eisenerz in Schachtöfen sind beispielsweise aus den Dokumenten DE 26 51 309 A1 und WO 2006/135984 A1 bekannt.
Es ist die Aufgabe der vorliegenden Erfindung, ein Verfahren bereitzustellen, welches die Vermeidung von $CO_2$ in dem Verbrennungsabgas mit kleineren Anlagen - mit entsprechend geringeren Verbrauchszahlen - und anderen $CO_2$-Entfernungsverfahren ermöglicht, sowie eine Vorrichtung zur Durchführung des Verfahrens.
Diese Aufgabe wird gelöst durch Verfahren zur Reduktion von Metalloxiden zu metallisiertem Material durch Kontakt mit heißem Reduktionsgas, wobei das Reduktionsgas zumindest zum Teil durch katalytische Reformierung eines Gemisches von

- einem Gas, das Kohlendioxid ($CO_2$) und/oder Wasserdampf ($H_2O$) enthält, mit
- gasförmigen Kohlenwasserstoffen

hergestellt wird, wobei die Wärme für die bei der Reformierung ablaufenden endothermen Reformierungsprozesse zumindest teilweise durch Verbrennung eines Brenngases geliefert wird, und das dabei entstehende Verbrennungsabgas abgezogen wird, wobei das Brenngas zumindest teilweise aus einer Teilmenge des bei der Reduktion von Metalloxiden zu metallisiertem Material anfallenden Topgases, gewonnen wird, dadurch gekennzeichnet, dass die Teilmenge des Topgases, aus der das Brenngas gewonnen wird, zunächst einer Entstaubung und dann einer CO-Konvertierungsreaktion unterzogen wird, und das bei der CO-Konvertierungsreaktion erhaltene Konvertierungsgas nach einer Abkühlung einer $CO_2$-Entfernung unterzogen wird, und das dabei anfallende $CO_2$-arme-Konvertierungsgas zumindest als Komponente des Brenngases genutzt wird.
Bevorzugterweise handelt es sich bei den Metalloxiden um Eisenoxide. Weiters können aber auch gemäß Richardson-Jeffes Diagramm beispielsweise Nickel, Kupfer, Blei, Kobalt reduziert werden.
Das Reduktionsgas wird zumindest zum Teil durch katalytische Reformierung eines Gemisches von

- einem Gas, das Kohlendioxid $CO_2$ und/oder Wasserdampf $H_2O$ enthält, mit
- gasförmigen Kohlenwasserstoffen

hergestellt. Diese Reformierung erfolgt durch zumindest teilweise Umsetzung der gasförmigen Kohlenwasserstoffe mit

$H_2O$ und $CO_2$ zu Wasserstoff ($H_2$) und Kohlenmonoxid (CO). Die für die Reformierung benötigten Substanzen $H_2O$ und/oder $CO_2$ können dem Gemisch zur Reformierung jeweils einzeln oder zusammen zugegeben werden, und/oder es wird das in dem Gas, das Kohlendioxid $CO_2$ und/oder Wasserdampf $H_2O$ enthält, vorhandene $H_2O$ und/oder $CO_2$ genutzt. Bevorzugt ist es, dem Gemisch zumindest $H_2O$ - als Wasserdampf - zuzugeben.

Unter gasförmigen Kohlenwasserstoffen sind beispielsweise Erdgas, Methan, Propan, Syngas aus Kohlevergasung, Koksofengas zu verstehen. Der Begriff gasförmige Kohlenwasserstoffe umfasst sowohl die Möglichkeit, dass lediglich eine Verbindung, beispielsweise reines Propan, vorliegt, als auch die Möglichkeit, dass ein Gemisch aus mehreren Verbindungen vorliegt, beispielsweise ein Gemisch aus Propan und Methan.

Das Gas, das das Kohlendioxid $CO_2$ und/oder Wasserdampf $H_2O$ enthält, ist beispielsweise Topgas aus dem erfindungsgemäßen Verfahren zur Reduktion von Metalloxiden. Unter Topgas ist dabei das Gas zu verstehen, welches aus dem Reduktionsaggregat, in dem die Reduktion der Metalloxide zu metallisiertem Material stattfindet, abgeführt wird. Vor der Reformierung wird es gegebenenfalls noch gereinigt, beispielsweise durch Abscheidung von mitgeführtem Staub und/oder Wasser.

Das Gas, das Kohlendioxid $CO_2$ und/oder Wasserdampf $H_2O$ enthält, kann beispielsweise auch Exportgas aus einem anderen Verfahren zur Reduktion von Metalloxiden sein, beispielseise Schmelzreduktionsverfahren, oder Syngas aus einem Kohlevergasungsverfahren wie beispielsweise einem Lurgi Festbettvergaser oder Siemens Flugstromvergaser. Bevorzugt ist es Topgas aus dem erfindungsgemäßen Verfahren zur Reduktion von Metalloxiden.

Eine typische Zusammensetzung von Topgas aus einem Direktreduktionsverfahren ist in Tabelle 1 gezeigt:

Tabelle 1: Typische Gaszusammensetzung von DR Topgas

|  |  | Topgaszusammensetzung nach Gasreinigung |
|---|---|---|
| CO | [vol%] | 20-25 |
| $CO_2$ | [vol%] | 15-20 |
| $H_2$ | [vol%] | 40-46 |
| $H_2O$ | [vol%] | 0-18 |
| $CH_4$ | [vol%] | 2-4 |
| $N_2$ | [vol%] | 1-2 |

In dem Gas, das Kohlendioxid $CO_2$ und/oder Wasserdampf $H_2O$ enthält, beträgt die Untergrenze der Menge an Kohlendioxid $CO_2$ 0 Vol%, bevorzugt 5 Vol%, besonders bevorzugt 15 Vol%, und die Obergrenze der Menge an der Menge an Kohlendioxid $CO_2$ 25 Vol%, bevorzugt 30 Vol%, besonders bevorzugt 40 Vol%.

In dem Gas, das Kohlendioxid $CO_2$ und/oder Wasserdampf $H_2O$ enthält, beträgt die Untergrenze der Menge an Wasserdampf $H_2O$ 0 Vol%, bevorzugt 10 Vol%, und die Obergrenze der Menge an der Menge Wasserdampf $H_2O$ 20 Vol%, bevorzugt 55 Vol%.

Durch die katalytische Reformierung wird ein Reduktionsgas erhalten, welches als reduzierende Bestandteile hauptsächlich $H_2$ und CO enthält. Es ist bekannt, dass es sich bei einer solchen Reformierung um eine endotherme Reaktion handelt, weshalb dem Reformer beispielsweise durch Verbrennung von Brenngas mit Sauerstoff, in Brennern, die dem Reformer zugeordnet sind, Wärme zugeführt wird. Der Sauerstoff wird beispielsweise geliefert durch Luftzufuhr, Zufuhr eines anderen sauerstoffhaltigen Gasgemisches, oder Zufuhr von technisch reinem Sauerstoff.

Zur Erhöhung der Effizienz des Gesamtverfahrens wird das Brenngas zumindest teilweise aus einer Teilmenge des bei der Reduktion von Metalloxiden zu metallisiertem Material anfallenden Topgases, gewonnen. Dieses Topgas enthält noch brennbare Bestandteile wie beispielsweise CO und $H_2$, die in den Brennern des Reformers zur Erzeugung der für die Reformierung notwendigen Wärme genutzt werden.

Erfindungsgemäß wird die Teilmenge des Topgases, aus der das Brenngas gewonnen wird, einer CO-Konvertierungsreaktion, auch genannt CO-Shift- oder Wassergas-Shift-Reaktion, unterzogen. Diese bekannte Reaktion dient dazu, den CO-Anteil im Topgas zu vermindern und gleichzeitig den $H_2$-Anteil zu erhöhen, wobei gleichzeitig $CO_2$ gebildet wird.

$$CO + H_2O \rightleftarrows CO_2 + H_2$$

$$\Delta H_{R\ 298}^{0} = -41,2 \ \text{kJ/mol}$$

Nach der CO-Konvertierungsreaktion erfolgt erfindungsgemäß eine Kühlung und Entfernung des $CO_2$ und $H_2O$

Gehaltes in einer $CO_2$ Entfernungsanlage, bevor eine Nutzung als Brenngas erfolgt. Dabei wird das $CO_2$ bereits vor der Verbrennung effizient abgeschieden. Entsprechend kann der zur Entfernung von $CO_2$ aus dem Verbrennungsabgas notwendige Aufwand reduziert werden.

Durch diese Maßnahmen wird den Brennern des Reformers ein Brenngas zugeführt, welches als brennbare Komponente hauptsächlich Wasserstoff $H_2$ enthält. Das hat den Vorteil, dass in den Brennern weniger $CO_2$ durch Verbrennung entsteht, da der Anteil an bei der Verbrennung $CO_2$-generierenden CO Komponenten im Brenngas gering ist.

Die CO-Konvertierungsreaktion erfolgt bevorzugterweise gemäß Hochtemperatur- oder Rohgaskonvertierungsverfahren, da beide Verfahren keine allzu hohe Empfindlichkeit gegenüber Schwefelwasserstoff ($H_2S$) -Anwesenheit im zu behandelnden Gasstrom aufweisen.

Die CO-Konvertierungsreaktion ist exotherm, kann aber auch isotherm geführt und dabei beispielsweise zur Erzeugung von Dampf genutzt werden. Zum Betrieb des CO-Konvertierungsreaktors ist je nach CO-Konvertierungsverfahren eine Eintrittstemperatur von 160-450°C, beim Hochtemperatur CO-Konvertierungsverfahren bevorzugterweise 300-450°C, einzuhalten. Im Falle einer Nasswäsche des Topgases vor der CO-Konvertierungsreaktion muss aufgrund des damit verbundenen Temperaturabfalls nach der Nasswäsche eine Aufheizung auf solche Temperaturen erfolgen. Im Falle einer Trockenentstaubung des Topgases vor der CO-Konvertierungsreaktion kann die Temperatur des Topgases gleich für die nachfolgende CO-Konvertierungsreaktion verwendet werden.

Erfindungsgemäß wird im Anschluss an die CO-Konvertierungsreaktion gekühlt und $CO_2$ sowie $H_2O$ aus dem Gasstrom des bei der CO-Konvertierungs-Reaktion erhaltenen Konvertierungsgases abgeschieden. Da der Gasstrom des Konvertierungsgases im Gegensatz zum Verbrennungsabgas nur eine geringe Stickstoffmenge enthält, und das $CO_2$ entsprechend konzentrierter vorliegt als im Verbrennungsabgas, und weil die $CO_2$-Entfernung vor der Verbrennung erfolgt, ist das einer $CO_2$-Entfernung zu unterziehende Gasvolumen geringer als bei einer $CO_2$-Entfernung aus Verbrennungsabgas. Entsprechend ist die Entfernung weniger aufwändig.

$CO_2$ liefert keinen Beitrag zum Brennwert des Brenngases. Bei herkömmlichen Verfahren zur Nutzung von Topgas - welches nach der Reduktion der Metalloxide bereits $CO_2$ enthält - im Brenngas ist daher oft eine Zumischung von gasförmigen Kohlenwasserstoffen, wie beispielsweise Erdgas, notwendig, um den Heizwert des Brenngases auf ein für die Erreichung der erforderlichen Flammentemperatur im Reformer erforderliches Maß anzuheben. Aufgrund der erfindungsgemäßen Entfernung des $CO_2$ vor der Verbrennung - und der damit einhergehenden Erhöhung des Heizwertes des Brenngases - kann in der Regel auf solch eine Zumischung von gasförmigen Kohlenwasserstoffen verzichtet werden. Selbstverständlich ist eine Zumischung von gasförmigen Kohlenwasserstoffen bei Bedarf weiterhin möglich.

Eine solche Zumischung kann so erfolgen, dass dem $CO_2$-armen-Konvertierungsgas zur Herstellung von Brenngas gasförmige Kohlenwasserstoffe zugemischt werden.

Wenn dem $CO_2$-arme-Konvertierungsgas vor der Nutzung als Brenngas nichts zugemischt wird, ist das $CO_2$-arme-Konvertierungsgas das Brenngas. Wenn dem $CO_2$-arme-Konvertierungsgas etwas zugemischt wird, beispielsweise gasförmige Kohlenwasserstoffe, ist es eine Komponente des Brenngases.

Ein weiterer Vorteil der Erfindung besteht darin, dass das Verbrennungsabgas nach einer gegebenenfalls erfolgten Wasserabscheidung vorzüglich als Sealgas genutzt werden kann. Als Sealgas bezeichnet man ein nicht brennbares und inertes Gas zur Abdichtung von Austritt von Prozessgas und zur Bereitstellung einer inerten Atmosphäre über einem Material. Sogenanntes Sealgas wird beispielsweise bei der Rohstoffchargierung und im Schachtaustrag eines Reduktionsschachtes, oder bei Heißförderern genutzt. Das bei dem erfindungsgemäßen Verfahren nach gegebenenfalls erfolgten Wasserabscheidung aus dem Verbrennungsabgas erhaltene Gas enthält als Hauptbestandteil Stickstoff und kaum $CO_2$. Im Gegensatz dazu enthält nach einem Verfahren wie in Figur 1 der WO2006135984 gezeigt anfallendes Verbrennungsabgas 18 bis 20 Vol% $CO_2$, welches bei Kontakt mit Produkt des Reduktionsverfahrens, beispielsweise heißem DRI (direct reduced iron) beispielsweise im Schachtaustrag eines Reduktionsschachtes oder in Heißförderern zu Rückoxidation und damit zu Produktverschlechterung führen kann. Eine solche Gefahr besteht bei Verwendung des erfindungsgemäß anfallenden Verbrennungsabgases als Sealgas nicht.

Aufgrund der hohen Temperatur des entstehenden Konvertierungsgases ist es bei dem erfindungsgemäßen Verfahren notwendig, dass das Konvertierungsgas vor der $CO_2$-Entfernung gekühlt wird, um eine für die $CO_2$-Entfernung notwendige Temperatur, bevorzugterweise von 30-60°C, zu erreichen. Vorzugsweise wird es auch von bei der Konvertierungsreaktion eingebrachtem, aber nicht umgesetztem Wasserdampf durch Kondensation befreit.

Weiterhin ist es notwendig, die Teilmenge des Topgases, aus der Brenngas gewonnen wird, vor der CO-Konvertierungsreaktion zu entstauben um den Wartungsaufwand aufgrund von Ablagerungen und Schädigung von Anlagenkomponenten, niedrig zu halten, eine hohe Verfügbarkeit der Anlage zu gewährleisten, sowie die Umweltvorschriften für in die Umwelt entlassen Gase bezüglich Staubgehalt einzuhalten. Die Entstaubung kann nass oder trocken erfolgen. Der Vorteil einer trockenen Entstaubung besteht darin, dass der Wärmeinhalt für Zwecke der Durchführung der CO-Konvertierungsreaktion notwendige Temperatur genutzt werden kann. Die Austrittstemperatur von Topgas aus einem Reduktionsaggregat liegt typischerweise im Bereich 250-500°C. Zur optimalen Temperaturführung für die nachfolgenden Verfahrensschritte kann es erforderlich sein, die Temperatur noch etwas durch Kühlung, Heizung, oder Verdampfung von Wasser einzustellen. Vorteilhafterweise wird der Wärmeinhalt zur Erzeugung von Dampf, welcher für die Durchführung der CO-Konvertierungsreaktion benötigt wird, genutzt. Es ist auch vorteilhaft, wenn der Dampf, welcher für die Durchführung der CO-Konvertierungsreaktion benötigt wird, an anderen Stationen des erfindungsgemäßen Verfahrens gewonnen wird.

Im Fall einer Nassentstaubung muss vor der Durchführung der CO-Konvertierungs-Reaktion gegebenenfalls eine Erwärmung des Topgasstromes erfolgen, um eine für die CO-Konvertierungsreaktion notwendige Temperatur des Gasstromes zu gewährleisten.

Die Entstaubung kann so erfolgen, dass das gesamte Topgas entstaubt wird, und nach dieser Entstaubung eine Teilmenge zur Gewinnung von Brenngas abgezweigt wird, oder es kann die Entstaubung nach der Abzweigung der Teilmenge zur Gewinnung von Brenngas erfolgen.

Das bei der $CO_2$-Entfernung anfallende $CO_2$ kann beispielsweise verdichtet, kondensiert und/oder sequestriert werden, um die $CO_2$-Emissionen des Verfahrens, welche an die Umweltatmosphäre abgegeben werden, zu senken.

Ein weiterer Gegenstand der vorliegenden Erfindung ist eine Vorrichtung zur Durchführung eines erfindungsgemäßen Verfahrens, mit einem Reduktionsaggregat zur Reduktion von Metalloxiden zu metallisiertem Material, einem Reformer zur Durchführung katalytischer Reformierung eines Gemisches von

- einem Gas, welches Kohlendioxid ($CO_2$) und/oder Wasserdampf ($H_2O$) enthält, mit
- gasförmigen Kohlenwasserstoffen,

wobei der Reformer mit einer Gemischzufuhrleitung zur Zufuhr des Gemisches versehen ist, und wobei der Reformer mit Brennern zur Lieferung von Wärme durch Verbrennung von Brenngas versehen ist, welche mit einer Sauerstoffzufuhrleitung verbunden sind, einer Abzugsleitung zum Abziehen von Verbrennungsabgas aus dem Reformer, einer Reduktionsgaszufuhrleitung für heißes Reduktionsgas aus dem Reformer in das Reduktionsaggregat, einer Abfuhrleitung zur Abfuhr von Topgas aus dem Reduktionsaggregat, wobei die Brenner über eine von der Abfuhrleitung abzweigende Verbindungsleitung mit der Abfuhrleitung verbunden sind, und wobei zumindest in der Abfuhrleitung zwischen Reduktionsaggregat und der von ihr abzweigenden Verbindungsleitung, oder in der Verbindungsleitung eine Entstaubungsvorrichtung vorhanden ist, dadurch gekennzeichnet, dass in der Verbindungsleitung, zwischen der gegebenenfalls vorhandenen Entstaubungseinrichtung und den Brennern, von der Abfuhrleitung aus gesehen aufeinanderfolgend ein CO-Konvertierungs-Reaktor, eine Gaskühlungsvorrichtung, und eine $CO_2$-Entfernungs-Vorrichtung vorhanden sind.

Bei den gasförmige Kohlenwasserstoffen handelt es sich typischerweise um Erdgas, Methan, Propan.

Nach einer Ausführungsform mündet eine Kohlenwasserstoffzuleitung für gasförmige Kohlenwasserstoffe in die Verbindungsleitung, wodurch bei Bedarf die Zumischung von gasförmigen Kohlenwasserstoffen erfolgen kann, um ein Brenngas mit gewünschtem Heizwert zu erhalten.

Dabei kann die Kohlenwasserstoffzuleitung für gasförmige Kohlenwasserstoffen von der Abfuhrleitung aus gesehen hinter der $CO_2$-Entfernungs-Vorrichtung in die Verbindungsleitung münden.

Nach einer Ausführungsform ist die Entstaubungsvorrichtung eine Trockenentstaubungsvorrichtung wie beispielsweise ein Zyklon, Heißgasfilter, Schlauchfilter.

Nach einer anderen Ausführungsform ist die Entstaubungsvorrichtung eine Nassentstaubungsvorrichtung.

Es kann auch mehr als eine Einstaubungsvorrichtung vorhanden sein. Diese können beispielsweise sowohl in der Abfuhrleitung zwischen Reduktionsaggregat und der von ihr abzweigenden Verbindungsleitung, und in der Verbindungsleitung angeordnet sein.

Gemäß einer Ausführungsform ist dabei beispielsweise eine Nassentstaubungsvorrichtung in der Abfuhrleitung zwischen Reduktionsaggregat und der von ihr abzweigenden Verbindungsleitung, und eine Trockenentstaubungsvorrichtung in der Verbindungsleitung angeordnet.

Dabei ist bevorzugterweise zwischen der Nassentstaubungsvorrichtung und dem CO-Konvertierungs-Reaktor eine Gaserwärmungsvorrichtung in der Verbindungsleitung vorhanden.

Im Folgenden wird die vorliegende Erfindung anhand mehrerer schematischer Figuren näher erklärt.

Figur 1 zeigt eine erfindungsgemäße Vorrichtung, bei der eine Nassentstaubung vorhanden ist.
Figur 2 zeigt eine erfindungsgemäße Vorrichtung mit kombinierter Naß- und Trockenentstaubung.
Figur 3 zeigt eine erfindungsgemäße Vorrichtung mit reiner Trockenentstaubung und Kühlung des Topgases.
Figur 4 zeigt ein Verfahren entsprechend Figur 2, wobei das Gas, welches Kohlendioxid ($CO_2$) und/oder Wasserdampf ($H_2O$ enthält, aus einer anderen Quelle als in Figur 2 stammt.

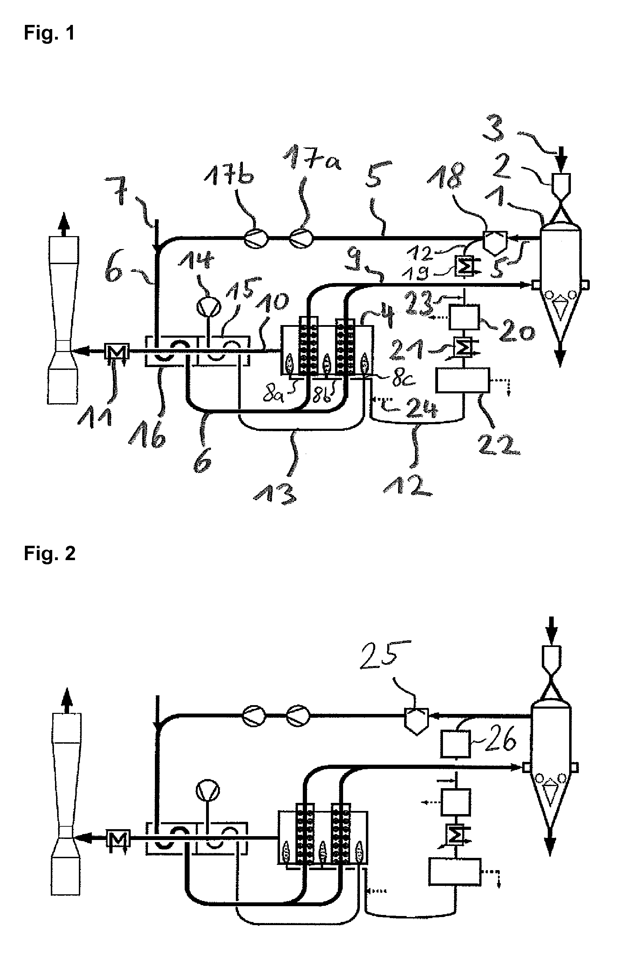

In Figur 1 werden einem Reduktionsaggregat 1, hier einem Festbettreduktionsschacht, werden über die Oxidzugabevorrichtung 2 Metalloxide 3 - im vorliegenden Fall Eisenoxide - zugegeben, beispielsweise als Pellets oder stückiges Erz. Über die Abfuhrleitung 5 wird das Topgas, welches in dem Reduktionsaggregat bei der Reduktion der Metalloxide zu metallisiertem Material aus dem Reduktionsgas entsteht, aus dem Reduktionsaggregat abgeführt. In der Abfuhrleitung 5 sind Verdichter 17a 17b vorhanden, um den in der Anlage entstehenden Druckabfall zu überwinden. In einen Reformer 4 zur katalytischen Reformierung eines Gemisches aus Topgas und gasförmigen Kohlenwasserstoffen werden über eine Gemischzufuhrleitung 6 ein Gemisch von Topgas und gasförmige Kohlenwasserstoffe, in diesem Fall Erdgas, zugeführt. Das Erdgas wird dabei über die Erdgasleitung 7 zugeführt. Der Reformer 4 ist mit Brennern 8a, 8b, 8c zur Lieferung von für die Reformierung notwendiger Wärme durch Verbrennung von Brenngas versehen. Das im Reformer 4 gebildete heiße Reduktionsgas wird über die Reduktionsgaszufuhrleitung 9 dem Reduktionsaggregat 1 zugeführt. Über eine Abzugsleitung 10 zum Abziehen des bei der Verbrennung von Brenngas im Reformer anfallenden Verbrennungsabgases wird das Verbrennungsabgas aus dem Reformer abgezogen. Das Verbrennungsabgas strömt dabei aus dem Reformer 4 heraus.

Die Abzugsleitung 10 enthält eine Vorrichtung 11 zum Kühlen des Verbrennungsabgases und zur Befreiung des Verbrennungsabgases von Wasser. Kühlung und Befreiung von Wasser erfolgen in derselben Vorrichtung. Die Abzugsleitung 10 führt in einen Kamin, durch den das Verbrennungsabgas in die Umwelt entlassen werden kann.

Durch die Vorrichtung 11 oder durch weitere Prozessabwärmen, beispielsweise aus Topgas oder dem Konvertierungsgas nach der CO-Konvertierung. kann auch Dampf produziert werden, der für die CO Konvertierung genutzt werden kann.

Die Brenner 8a, 8b, 8c sind mit Vorrichtungen zur Zuführung von Brenngas, dargestellt durch die von der Abfuhrleitung 5 abzweigende Verbindungsleitung 12, versehen. Durch die Verbindungsleitung 12 wird den Brennern 8a, 8b, 8c Brenngas zugeleitet.

Über die Sauerstoffzufuhrleitung 13 zur Zufuhr von Sauerstoff - in diesem Fall mittels Luftzufuhr - wird den Brennern 8a, 8b, 8c der für die Verbrennung des Brenngases notwendige Sauerstoff zugeführt. Die Luft wird mittels Gebläse 14 in die Sauerstoffzufuhrleitung eingespeist.

In der Abzugsleitung 10 ist eine Vorrichtung zur Erwärmung der in der Sauerstoffzufuhrleitung 13 geführten Luft, in diesem Fall ein Rekuperator 15 für indirekten Wärmeaustausch der Luft in der Sauerstoffzufuhrleitung 13 mit dem Verbrennungsabgas in der Abzugsleitung 10, vorhanden.

Weiterhin ist in der Abzugsleitung 10 eine Vorrichtung zur Erwärmung des Gemisches aus Topgas und gasförmigen Kohlenwasserstoffen in der Gemischzufuhrleitung 6, in diesem Fall ein Rekuperator 16 für indirekten Wärmeaustausch zwischen dem Gemisch aus Topgas und gasförmigen Kohlenwasserstoffen in der Gemischzufuhrleitung 6 und dem Verbrennungsabgas in der Abzugsleitung 10, vorhanden.

In der Abfuhrleitung 5 ist zwischen Reduktionsaggregat 1 und der Abzweigung der Verbindungsleitung 12 eine Entstaubungsvorrichtung 18, in diesem Fall eine Nassentstaubungsvorrichtung, vorhanden.

In der Verbindungsleitung 12 sind von der Abzweigung aus der Abfuhrleitung 5 aus gesehen hintereinander eine Gaserwärmungsvorrichtung 19, in diesem Fall ein Rekuperator zum indirekten Wärmeaustausch, ein CO-Konvertierungs-Reaktor 20, eine Gaskühlungsvorrichtung 21 und eine $CO_2$-Entfernungsvorrichtung 22 vorhanden.

Von der Abzweigung aus der Abfuhrleitung 5 aus gesehen mündet dabei vor dem CO-Konvertierungs-Reaktor 20 eine Dampfzufuhrleitung 23 in die Verbindungsleitung 12. Eine Ausfuhr von produziertem Dampf aus dem CO-Konvertierungs-Reaktor 20 ist mit einem von diesem ausgehenden strichlierten Pfeil angedeutet. Eine Ausfuhr von Kondensat aus der Gaskühlungsvorrichtung 21 ist durch einen von dieser ausgehenden Pfeil dargestellt. Die Ausfuhr eines $CO_2$-reichen Gasstromes aus der $CO_2$-Entfernungsvorrichtung 22 ist durch einen von dieser ausgehenden strichlierten Pfeil dargestellt. Der $CO_2$-reiche Gasstrom kann beispielsweise sequestriert werden.

Von der Abfuhrleitung aus gesehen hinter der $CO_2$-Entfernungsvorrichtung 22 mündet eine Kohlenwasserstoffzuleitung 24 für gasförmige Kohlenwasserstoffe in die Verbindungsleitung 12.

Die im Reduktionsaggregat 1 reduzierten Metalloxide 3 werden, wie durch einen Pfeil angedeutet, aus dem Reduktionsaggregat 1 entnommen.

Das bei der Reduktion anfallende Topgas wird durch die Abfuhrleitung 5 aus dem Reduktionsaggregat ausgeführt. Nach der Entstaubung in der Entstaubungsvorrichtung 5 wird eine Teilmenge des Topgases in der Verbindungsleitung 12 zu den Brennern 8a, 8b, 8c geführt, wobei es zunächst in der Gaserwärmungsvorrichtung 19 auf eine Temperatur erwärmt wird, die zur Funktion des CO-Konvertierungs-Reaktors 20 notwendig ist, und nach Dampfzufuhr über die Dampfzufuhrleitung 23 im CO-Konvertierungs-Reaktors 20 der CO-Konvertierungsreaktion unterworfen wird. Das dabei erhaltene Produkt, genannt Konvertierungsgas, wird in der Gaskühlungsvorrichtung 21 gekühlt und durch Kondensation von mitgeführten Dampf befreit, und anschließend in der $CO_2$-Entfernungsvorrichtung 22 von $CO_2$ befreit. Das $CO_2$-arme Produkt dieses Schrittes, genannt $CO_2$-armes-Konvertierungsgas, wird nach Zumischung von gasförmigen Kohlenwasserstoffen durch die Kohlenwasserstoffzuleitung 24 in den Brennern 8a, 8b, 8c als Brenngas verwendet. Der zur Verbrennung notwendige Sauerstoff wird über die Sauerstoffzufuhrleitung 13 in Form von mittels Gebläse 14 komprimierter Luft zugeführt. Im Reformer 4 wird heißes Reduktionsgas durch Reformierung eines Gemisches aus Topgas und gasförmiger Kohlenwasserstoffe hergestellt, und über die Reduktionsgaszufuhrleitung 9 dem Reduktionsaggregat zugeleitet.

Figur 2 zeigt eine Vorrichtung analog zu Figur 1, wobei der Unterschied besteht, dass keine Entstaubungsvorrichtung 18 und keine Gaserwärmungsvorrichtung 19 vorhanden sind. Stattdessen sind

EP 2 459 754 B1

- in der Abfuhrleitung 5 vom Reduktionsaggregat 1 aus gesehen hinter der Abzweigung der Verbindungsleitung 12 eine Entstaubungsvorrichtung 25, die als Nassentstaubungsvorrichtung ausgeführt ist, und
- in der Verbindungsleitung 12 zwischen der Abzweigung der Verbindungsleitung 12 aus der Abfuhrleitung 5 und dem CO-Konvertierungsraktor 20 eine Entstaubungsvorrichtung 26, die als Trockenentstaubungsvorrichtung ausgeführt ist,

vorhanden. Da in der Entstaubungsvorrichtung 26 kein Temperaturverlust auftritt, ist keine Gaserwärmungsvorrichtung 19 zur Gewährleistung der für den CO-Konvertierungsreaktor notwendigen Temperatur notwendig. Zur besseren Übersichtlichkeit sind nur die in Figur 2 gegenüber Figur 1 hinzugekommenen Vorrichtungsteile mit Bezugszeichen versehen.

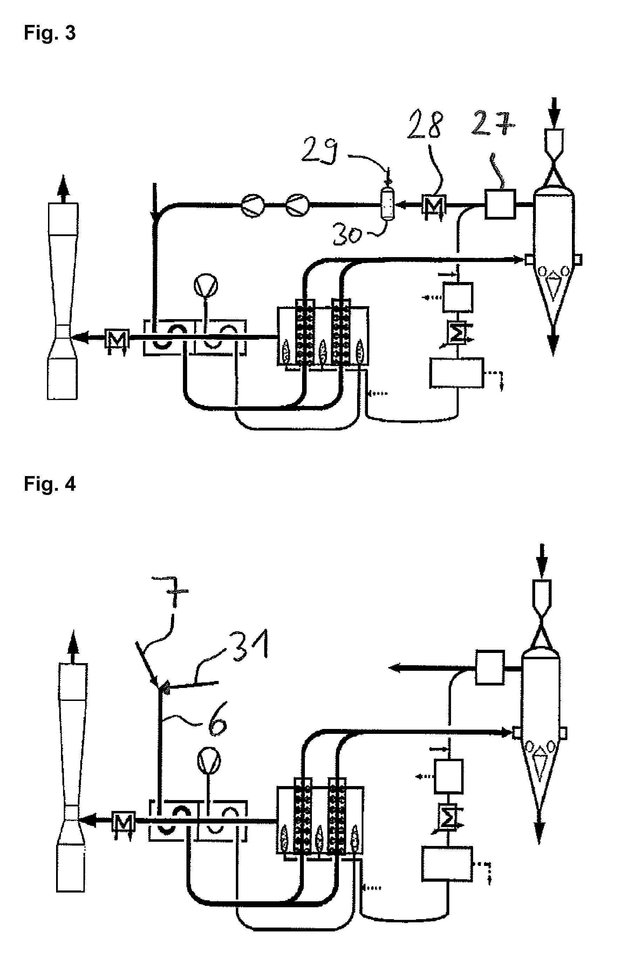

Figur 3 zeigt eine Vorrichtung analog zu Figur 1, wobei der Unterschied darin besteht, dass keine Entstaubungsvorrichtung 18 und keine Gaserwärmungsvorrichtung 19 vorhanden sind. Stattdessen sind

- in der Abfuhrleitung 5 vom Reduktionsaggregat 1 aus gesehen vor der Abzweigung der Verbindungsleitung 12 eine Entstaubungsvorrichtung 27, die als Trockenentstaubungsvorrichtung ausgeführt ist, und
- in der Abfuhrleitung 5 vom Reduktionsaggregat 1 aus gesehen hinter der Abzweigung der Verbindungsleitung 12 eine Vorrichtung zur Kühlung des Topgases, umfassend das als Rekuperator ausgeführte Kühlelement 28 und den mit Kühlwasser 29 betriebenen Gaskühler 30,

vorhanden.
Da in der Entstaubungsvorrichtung 27 kein Temperaturverlust auftritt, ist keine Gaserwärmungsvorrichtung 19 zur Gewährleistung der für den CO-Konvertierungsreaktor notwendigen Temperatur notwendig. Zur besseren Übersichtlichkeit sind nur die in Figur 2 gegenüber Figur 1 hinzugekommenen Vorrichtungsteile mit Bezugszeichen versehen.
Figur 4 zeigt eine Vorrichtung analog zu Figur 2, mit dem Unterschied, dass als Gas, welches Kohlendioxid ($CO_2$) und/oder Wasserdampf ($H_2O$ enthält, nicht Topgas, sondern Syngas aus einem Kohlevergasungsverfahren mit bis zu 40 Vol% Kohlendioxid und bis zu 55 Vol% Wasserdampf verwendet wird. Dieses Syngas aus einem nicht dargestellten Kohlevergasungsverfahren wird über die in die Gemischzufuhrleitung 6 mündende Syngasleitung 31 in die Gemischzufuhrleitung 6 eingeleitet. Das in der Gemischzufuhrleitung 6 dabei generierte Gemisch von Syngas und Erdgas wird im Reformer 4 reformiert. Zur besseren Übersichtlichkeit sind nur die in Figur 4 gegenüber Figur 2 hinzugekommenen Vorrichtungsteile sowie die Erdgasleitung 7 mit Bezugszeichen versehen.

Bezugszeichenliste:

| 1 | Reduktionsaggregat |
| 2 | Oxidzugabevorrichtung |
| 3 | Metalloxide |
| 4 | Reformer |
| 5 | Abfuhrleitung |
| 6 | Gemischzufuhrleitung |
| 7 | Erdgasleitung |
| 8a, 8b, 8c | Brenner |
| 9 | Reduktionsgaszufuhrleitung |
| 10 | Abzugsleitung |
| 11 | Vorrichtung zum Kühlen/Befreiung von $H_2O$ |
| 12 | Verbindungsleitung |
| 13 | Sauerstoffzufuhrleitung |
| 14 | Kompressor |
| 15 | Rekuperator |
| 16 | Rekuperator |
| 17a, 17b | Verdichter |
| 18 | Entstaubungsvorrichtung |
| 19 | Gaserwärmungsvorrichtung |
| 20 | CO-Konvertierungsreaktor |
| 21 | Gaskühlungsvorrichtung |
| 22 | $CO_2$-Entfernungsvorrichtung |
| 23 | Dampfzufuhrleitung |

24      Erdgaszuleitung
25      Entstaubungsvorrichtung
26      Entstaubungsvorrichtung
27      Entstaubungsvorrichtung
28      Kühlelement
29      Kühlwasser
30      Gaskühler
31      Syngasleitung

**Patentansprüche**

1. Verfahren zur Reduktion von Metalloxiden zu metallisiertem Material durch Kontakt mit heißem Reduktionsgas, wobei das Reduktionsgas zumindest zum Teil durch katalytische Reformierung eines Gemisches von

- einem Gas, das Kohlendioxid ($CO_2$) und/oder Wasserdampf ($H_2O$) enthält, mit
- gasförmigen Kohlenwasserstoffen hergestellt wird, wobei die Wärme für die bei der Reformierung ablaufenden endothermen Reformierungsprozesse zumindest teilweise durch Verbrennung eines Brenngases geliefert wird, und das dabei entstehende Verbrennungsabgas abgezogen wird, wobei das Brenngas zumindest teilweise aus einer Teilmenge des bei der Reduktion von Metalloxiden zu metallisiertem Material anfallenden Topgases, gewonnen wird und die Teilmenge des Topgases aus der das Brenngas gewonnen wird einer Entstaubung unterzogen wird, **dadurch gekennzeichnet, dass** die Teilmenge des Topgases, aus der das Brenngas gewonnen wird, und die der Entstaubung unterzogen wurde nach der Entstaubung einer CO-Konvertierungsreaktion unterzogen wird, und das bei der CO-Konvertierungsreaktion erhaltene Konvertierungsgas nach einer Abkühlung einer $CO_2$-Entfernung unterzogen wird, und das dabei anfallende $CO_2$-arme-Konvertierungsgas zumindest als Komponente des Brenngases genutzt wird.

2. Verfahren nach Anspruch 1, **dadurch gekennzeichnet, dass** das Gas, das Kohlendioxid ($CO_2$) und/oder Wasserdampf ($H_2O$ enthält, Topgas aus dem Verfahren zur Reduktion von Metalloxiden ist.

3. Verfahren nach Anspruch 1, **dadurch gekennzeichnet, dass** das Gas, das Kohlendioxid ($CO_2$) und/oder Wasserdampf ($H_2O$) enthält, Exportgas aus einem Schmelzreduktionsverfahren oder Syngas aus einem Kohlevergasungsverfahren ist.

4. Verfahren nach Anspruch 1 bis 3, **dadurch gekennzeichnet, dass** dem $CO_2$-armen Konvertierungsgas zur Gewinnung von Brenngas gasförmige Kohlenwasserstoffe zugemischt werden.

5. Verfahren nach einem der vorangehenden Ansprüche, **dadurch gekennzeichnet, dass** die Entstaubung trocken erfolgt.

6. Verfahren nach einem der Ansprüche 1 bis 4, **dadurch gekennzeichnet, dass** die Entstaubung nass erfolgt.

7. Vorrichtung zur Durchführung eines Verfahrens nach einem der Ansprüche 1 bis 6, mit einem Reduktionsaggregat (1) zur Reduktion von Metalloxiden (3) zu metallisiertem Material, einem Reformer (4) zur Durchführung katalytischer Reformierung eines Gemisches von

- einem Gas, das Kohlendioxid ($CO_2$ und/oder Wasserdampf ($H_2O$) enthält, mit
- gasförmigen Kohlenwasserstoffen, wobei der Reformer (4) mit einer Gemischzufuhrleitung (6) zur Zufuhr des Gemisches versehen ist, und wobei der Reformer mit Brennern (8a,8b,8c) zur Lieferung von Wärme durch Verbrennung von Brenngas versehen ist, welche mit einer Sauerstoffzufuhrleitung (13) verbunden sind, einer Abzugsleitung (10) zum Abziehen von Verbrennungsabgas aus dem Reformer (4), einer Reduktionsgaszufuhrleitung (9) für heißes Reduktionsgas aus dem Reformer (4) in das Reduktionsaggregat (1), einer Abfuhrleitung (5) zur Abfuhr von Topgas aus dem Reduktionsaggregat (1),

wobei die Brenner (8a,8b,8c) über eine von der Abfuhrleitung (5) abzweigende Verbindungsleitung (12) mit der Abfuhrleitung (5) verbunden sind, und wobei zumindest in der Abfuhrleitung (5) zwischen Reduktionsaggregat (1) und der von ihr abzweigenden Verbindungsleitung (12), oder in der Verbindungsleitung (12) eine Entstaubungsvorrichtung (18) vorhanden ist, **dadurch gekennzeichnet, dass** in der Verbindungsleitung (12), zwischen der gegebenenfalls vorhandenen Entstaubungseinrichtung (18) und den Brennern (8a,8b,8c), von der Abfuhrleitung (5) aus gesehen aufeinanderfolgend ein CO-Konvertierungs-Reaktor (20), eine Gaskühlungsvorrichtung (21), und eine $CO_2$-Entfernungs-Vorrichtung (22) vorhanden sind.

8. Vorrichtung nach Anspruch 7, **dadurch gekennzeichnet, dass** eine Kohlenwasserstoffzuleitung (24) für gasförmige Kohlenwasserstoffe in die Verbindungsleitung (12) mündet.

9. Vorrichtung nach Anspruch 8, **dadurch gekennzeichnet, dass** die Kohlenwasserstoffzuleitung (24) für gasförmige Kohlenwasserstoffe von der Abfuhrleitung (5) aus gesehen hinter der $CO_2$-Entfernungs-Vorrichtung (22) in die Verbindungsleitung (12) mündet.

10. Vorrichtung nach einem der Ansprüche 7 bis 9, **dadurch gekennzeichnet, dass** die Entstaubungsvorrichtung (18) eine Trockenentstaubungsvorrichtung ist.

11. Vorrichtung nach einem der Ansprüche 7 bis 9, **dadurch gekennzeichnet, dass** die Entstaubungsvorrichtung (18) eine Nassentstaubungsvorrichtung ist.

12. Vorrichtung nach Anspruch 11, **dadurch gekennzeichnet, dass** zwischen der Nassentstaubungsvorrichtung und dem CO-Konvertierungsreaktor (20) eine Gaserwärmungsvorrichtung (19) in der Verbindungsleitung vorhanden ist.

13. Vorrichtung nach einem der Ansprüche 7 bis 12, **dadurch gekennzeichnet, dass** das Reduktionsaggregat (1) eine Wirbelschichtkaskade ist.

14. Vorrichtung nach einem der Ansprüche 7 bis 12, **dadurch gekennzeichnet, dass** das Reduktionsaggregat (1) ein Festbettreduktionsschacht ist.

## Claims

1. Process for the reduction of metal oxides to form metalized material by contact with hot reducing gas, wherein the reducing gas is produced at least partially by catalytic reformation of a mixture of

   - a gas containing carbon dioxide ($CO_2$) and/or steam ($H_2O$) with
   - gaseous hydrocarbons,

   wherein the heat for the endothermal reformation processes which take place during the reformation is provided at least partially by the combustion of a fuel gas, and the combustion off-gas produced in the process is drawn off, wherein the fuel gas is obtained at least partially from a partial quantity of the top gas produced during the reduction of metal oxides to form metalized material, and the partial quantity of the top gas, from which the fuel gas is obtained, is subjected to dedusting, **characterized in that** the partial quantity of the top gas, from which the fuel gas is obtained and which has been subjected to dedusting, is, after dedusting, subjected to a CO conversion reaction, and the conversion gas obtained during the CO conversion reaction is subjected to $CO_2$ removal after cooling, and the $CO_2$-depleted conversion gas produced in the process is used at least as a component of the fuel gas.

2. Process according to Claim 1, **characterized in that** the gas containing carbon dioxide ($CO_2$) and/or steam ($H_2O$) is top gas from the process for the reduction of metal oxides.

3. Process according to Claim 1, **characterized in that** the gas containing carbon dioxide ($CO_2$) and/or steam ($H_2O$) is export gas from a smelting reduction process or syngas from a coal gasification process.

4. Process according to Claims 1 to 3, **characterized in that** gaseous hydrocarbons are admixed to the $CO_2$-depleted conversion gas in order to obtain fuel gas.

5. Process according to one of the preceding claims, **characterized in that** the dedusting takes place in dry form.

6. Process according to one of Claims 1 to 4, **characterized in that** the dedusting takes place in wet form.

7. Apparatus for carrying out a process according to one of Claims 1 to 6, having a reduction unit (1) for the reduction of metal oxides (3) to form metalized material, having a reformer (4) for carrying out catalytic reformation of a mixture of

- a gas containing carbon dioxide ($CO_2$) and/or steam ($H_2O$) with
- gaseous hydrocarbons,

wherein the reformer (4) is provided with a mixture supply line (6) for supplying the mixture, and wherein the reformer is provided with burners (8a, 8b, 8c), which are connected to an oxygen supply line (13), for providing heat by the combustion of fuel gas,
having a drawing-off line (10) for drawing off combustion off-gas from the reformer (4),
having a reducing gas supply line (9) for hot reducing gas from the reformer (4) into the reduction unit (1),
having a discharge line (5) for discharging top gas from the reduction unit (1),
wherein the burners (8a, 8b, 8c) are connected to the discharge line (5) via a connection line (12) which branches off from the discharge line (5), and wherein a dedusting apparatus (18) is present at least in the discharge line (5) between the reduction unit (1) and the connection line (12) which branches off from it, or in the connection line (12), **characterized in that** a CO conversion reactor (20), a gas cooling apparatus (21) and a $CO_2$ removal apparatus (22) are present in succession, as seen from the discharge line (5), in the connection line (12), between the dedusting device (18) which may be present and the burners (8a, 8b, 8c).

8. Apparatus according to Claim 7, **characterized in that** a hydrocarbon feed line (24) for gaseous hydrocarbons issues into the connection line (12).

9. Apparatus according to Claim 8, **characterized in that** the hydrocarbon feed line (24) for gaseous hydrocarbons issues into the connection line (12) downstream from the $CO_2$ removal apparatus (22), as seen from the discharge line (5).

10. Apparatus according to one of Claims 7 to 9, **characterized in that** the dedusting apparatus (18) is a dry-dedusting apparatus.

11. Apparatus according to one of Claims 7 to 9, **characterized in that** the dedusting apparatus (18) is a wet-dedusting apparatus.

12. Apparatus according to Claim 11, **characterized in that** a gas heating apparatus (19) is present in the connection line between the wet-dedusting apparatus and the CO conversion reactor (20).

13. Apparatus according to one of Claims 7 to 12, **characterized in that** the reduction unit (1) is a fluidized bed cascade.

14. Apparatus according to one of Claims 7 to 12, **characterized in that** the reduction unit (1) is a fixed-bed reduction shaft.

**Revendications**

1. Procédé pour la réduction d'oxydes métalliques pour obtenir une matière métallisée par contact avec un gaz de réduction chaud, dans lequel le gaz de réduction étant obtenu au moins en partie par reformage catalytique d'un mélange d'un gaz qui contient du dioxyde de carbone ($CO_2$) et/ou de la vapeur d'eau ($H_2O$) avec des hydrocarbures gazeux, dans lequel la chaleur pour les processus de reformage endodermique qui se déroulent lors du reformage est fournie au moins en partie par la combustion d'un gaz combustible et les gaz d'échappement qui se forment lors de ladite combustion sont évacués, dans lequel le gaz combustible est obtenu au moins en partie à partir d'une quantité partielle du gaz de sommet que l'on obtient lors de la réduction d'oxydes métalliques pour obtenir une matière métallisée et la quantité partielle du gaz de sommet à partir de laquelle on obtient le gaz combustible est soumise à un dépoussiérage, **caractérisé en ce que** la quantité partielle du gaz de sommet à partir de laquelle on obtient le gaz combustible et qui a été soumise au dépoussiérage est soumise après le dépoussiérage à une réaction de conversion du CO, et le gaz de conversion que l'on obtient lors de la réaction de conversion du CO est soumis, après un refroidissement, à une élimination du $CO_2$, et le gaz de conversion pauvre en $CO_2$ que l'on obtient en l'occurrence est utilisé au moins comme composant du gaz combustible.

2. Procédé selon la revendication 1, **caractérisé en ce que** le gaz qui contient du dioxyde de carbone ($CO_2$) et/ou de la vapeur d'eau ($H_2O$) représente le gaz de sommet que l'on obtient à partir du procédé pour la réduction d'oxydes métalliques.

**3.** Procédé selon la revendication 1, **caractérisé en ce que** le gaz qui contient du dioxyde de carbone ($CO_2$) et/ou de la vapeur d'eau ($H_2O$) représente un gaz d'exportation qui provient d'un procédé de réduction en fusion ou un gaz de synthèse qui provient d'un procédé de gazéification du charbon.

**4.** Procédé selon l'une quelconque des revendications 1 à 3, **caractérisé en ce que** l'on ajoute par mélange au gaz de conversion pauvre en $CO_2$ des hydrocarbures gazeux pour l'obtention d'un gaz combustible.

**5.** Procédé selon l'une quelconque des revendications précédentes, **caractérisé en ce que** le dépoussiérage a lieu par voie sèche.

**6.** Procédé selon l'une quelconque des revendications 1 à 4, **caractérisé en ce que** le dépoussiérage a lieu par voie humide.

**7.** Dispositif pour la mise en oeuvre d'un procédé selon l'une quelconque des revendications 1 à 6, comprenant une unité de réduction (1) pour la réduction d'oxydes métalliques (3) pour obtenir une matière métallisée, un reformeur (4) pour la mise en oeuvre d'un reformage catalytique d'un mélange d'un gaz qui contient du dioxyde de carbone ($CO_2$) et/ou de la vapeur d'eau ($H_2O$) avec des hydrocarbures gazeux, dans lequel le reformeur (4) est muni d'un conduit d'alimentation de mélange (6) pour l'alimentation du mélange, et dans lequel le reformeur est muni de brûleurs (8a, 8b, 8c) pour procurer de la chaleur par la combustion du gaz combustible, qui sont reliés à un conduit d'alimentation d'oxygène (13), un conduit d'évacuation (10) pour l'évacuation des gaz d'échappement issus de la combustion à partir du reformeur (4), un conduit d'alimentation du gaz réduction (9) pour du gaz réduction chaud à partir du reformeur (4) jusque dans l'unité de réduction (1), un conduit d'évacuation (5) pour l'évacuation du gaz de sommet à partir de l'unité de réduction (1), dans lequel les brûleurs (8a, 8b, 8c) sont reliés au conduit d'évacuation (5) via un conduit de liaison (12) qui bifurque à partir du conduit d'évacuation (5), et dans lequel un dispositif de dépoussiérage (18) est présent au moins dans le conduit d'évacuation (5) entre l'unité de réduction (1) et le conduit de liaison (12) qui s'en écarte par bifurcation, ou dans le conduit de liaison (12), **caractérisé en ce qu'**un réacteur (20) pour la conversion du CO, un dispositif de refroidissement des gaz (21) et un dispositif d'élimination du $CO_2$ (22) sont présents l'un à la suite de l'autre lorsqu'on regarde à partir du conduit d'évacuation (5), dans le conduit de liaison (12), entre le dispositif de dépoussiérage (18) éventuellement présent et les brûleurs (8a, 8b, 8c).

**8.** Dispositif selon la revendication 7, **caractérisé en ce qu'**un conduit d'alimentation d'hydrocarbures (24) pour des hydrocarbures gazeux débouche dans le conduit de liaison (12).

**9.** Dispositif selon la revendication 8, **caractérisé en ce que** le conduit d'alimentation d'hydrocarbures (24) pour des hydrocarbures gazeux débouche dans le conduit de liaison (12) derrière le dispositif d'élimination du $CO_2$ (22) lorsqu'on regarde à partir du conduit d'évacuation (5).

**10.** Dispositif selon l'une quelconque des revendications 7 à 9, **caractérisé en ce que** le dispositif de dépoussiérage (18) est un dispositif de dépoussiérage par voie sèche.

**11.** Dispositif selon l'une quelconque des revendications 7 à 9, **caractérisé en ce que** le dispositif de dépoussiérage (18) est un dispositif de dépoussiérage par voie humide.

**12.** Dispositif selon la revendication 11, **caractérisé en ce qu'**un dispositif de réchauffement des gaz (19) est présent dans le conduit de liaison entre le dispositif de dépoussiérage par voie humide et le réacteur pour la conversion du CO (20).

**13.** Dispositif selon l'une quelconque des revendications 7 à 12, **caractérisé en ce que** l'unité de réduction (1) est une cascade en lit fluidisé.

**14.** Dispositif selon l'une quelconque des revendications 7 à 12, **caractérisé en ce que** l'unité de réduction (1) est une cuve de réduction en lit fixe.

**Fig. 1**

**Fig. 2**

EP 2 459 754 B1

**Fig. 3**

**Fig. 4**

13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006135984 A
- DE 2651309 A1
- WO 2006135984 A1